# EUROPEAN PATENT SPECIFICATION

(11) **EP 2 658 137 B1**
(45) Date of publication and mention of the grant of the patent: **18.03.2015**
(21) Application number: 12199628.4
(22) Date of filing: 28.12.2012
(51) Int. Cl.: H04B 3/00, H04B 3/02, H04B 3/56

(54) **Surge isolating device**
Surge isolierendes Geräte
Dispositif d'isolement contre les surtensions

(30) Priority: 24.04.2012 TW 101207607
(43) Date of publication of application: 30.10.2013
(73) Proprietor: Taiwan Cable Connection Corp., 23586 New Taipei City (TW)
(72) Inventor: Chen, Lioyd, 23586 New Taipei City (TW)
(74) Representative: Michalski Hüttermann & Partner Patentanwälte mbB

(56) References cited:
- GB-A- 2 406 976
- JP-A- 2002 214 254
- TW-U- M 438 750

## Description

The invention relates to a surge isolating device, more particularly to a surge isolating device that is connected in series between a first transmission line and a second transmission line for isolating surge on the first transmission line so as to prevent the surge from entering the second transmission line.

Referring to Figures 1 and 2 (GB2406967), a conventional surge isolating device 900 is disposed on an outdoor transmission line for preventing surge on the outdoor transmission line from damaging indoor electronic devices connected to the outdoor transmission line. The conventional surge isolating device 900 includes an outdoor-end housing 91, an indoor-end housing 92, a transmission member 93, a wire 94, a tubular body 95, a plurality of capacitors 961, 962, and a plurality of inductors 971, 972. The outdoor-end housing 91 and the indoor-end housing 92 respectively serve as "outdoor ground" and "indoor ground". The transmission member 93 receives an external signal that is subsequently transmitted by the wire 94. The wire 94 extends through the tubular body 95, and the tubular body 95 is electrically connected with the outdoor-end housing 91 and is proximate to the inductors 971, 972. The capacitors 961, 962 are each connected with the outdoor-end housing 91 and the indoor-end housing 92 through the use of respective annular metal members 991, 992, 993, 994, conductive members 981, 982 and the tubular body 95. The capacitor 961 is conductively connected to the outdoor-end housing 91 at one terminal through the annular member 991, and to the indoor-end housing 92 at the other terminal through the annular metal member 992. The capacitor 962 is conductively connected to the outdoor-end housing 91 at one terminal through the annular metal member 993, the conductive member 981 and the tubular body 95, and to the indoor-end housing 92 at the other terminal through the annular metal member 994 and the conductive member 982.

JP 2002 214254 A describes a current measuring device which is detachably mounted on a power transmission/distribution line to detect current thereof, an arrester device which performs an arrester function through a resistance element for a high voltage built into an insulator while having a voltage sensor for detecting the voltage of the power transmission/distribution line and an optical signal conversion means for converting the sensed current signal of the power transmission/distribution line to an optical signal while a light transmission path is provided in the insulator of the arrester device.

With the trend focusing on performance improvement and size reduction, the object of the present invention is to provide a surge isolating device that has a reduced size and an improved performance.

The object is solved by the features of the independent claim. Preferred embodiments are detailed in the dependent claims.

According to the present invention, there is provided a surge isolating device to be connected in series between a first transmission line and a second transmission line for isolating surge on the first transmission line so as to prevent the surge from entering the second transmission line. The surge isolating device includes a housing unit, a transmission unit and an isolation unit.

The housing unit defines an internal space, and includes a conductive input-end housing and a conductive output-end housing connected to each other.

The transmission unit is disposed in the internal space, and includes a transmission wire that is to be electrically connected between the first transmission line and the second transmission line.

The isolation unit is disposed in the internal space, and includes a tubular conductive body, an inductor, an annular capacitor and an annular conductive member. The tubular conductive body extends along an axial direction, is electrically connected to the conductive input-end housing, has the transmission wire extending therethrough, and is capable of generating mutual inductance with the transmission wire by virtue of coupling therebetween. The inductor is capable of generating mutual inductance with the tubular conductive body by virtue of coupling therebetween. The annular capacitor surrounds the tubular conductive body, and has a first surface and a second surface that are opposite to each other along the axial direction. The second surface is electrically connected to the conductive output-end housing. The annular conductive member surrounds fittingly and tightly on the tubular conductive body, and contacts the first surface of the annular capacitor such that the annular capacitor is electrically connected to the tubular conductive body.

Other features and advantages of the present invention will become apparent in the following detailed description of the preferred embodiment with reference to the accompanying drawings, of which:
Figure 1 is an exploded perspective view of a conventional surge isolating device;
Figure 2 is a sectional view of the conventional surge isolating device;
Figure 3 is an exploded perspective view of the preferred embodiment of a surge isolating device according to the present invention;
Figure 4 is an exploded perspective view of a housing unit of the preferred embodiment;
Figure 5 is an exploded perspective view of a transmission unit of the preferred embodiment;
Figure 6 is an exploded perspective view of an isolation unit of the preferred embodiment;
Figure 7 is a sectional view of the preferred embodiment;
Figure 8 is an exploded fragmentary perspective view of the preferred embodiment for illustrating an inductor, an annular capacitor, a first annular conductive member and a second annular conductive member of the isolation unit; and

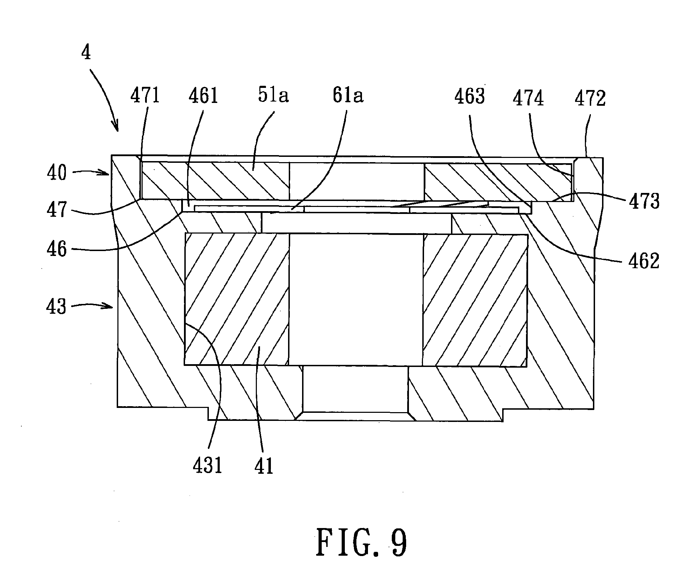

Figure 9 is a fragmentary sectional view to illustrate a stepping structure of the inductor illustrated in Figure 8.

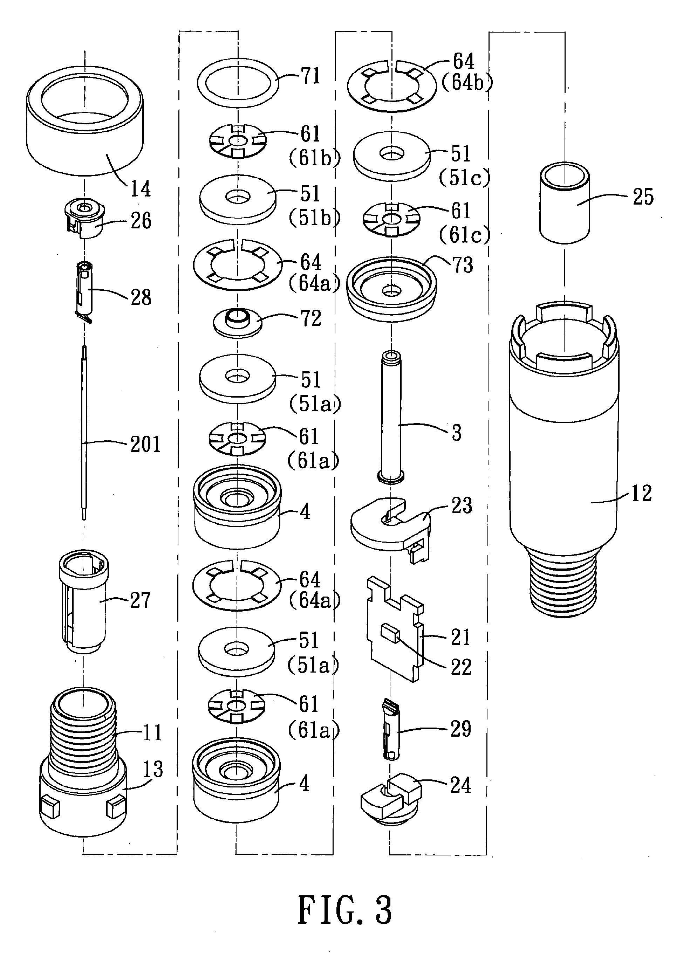

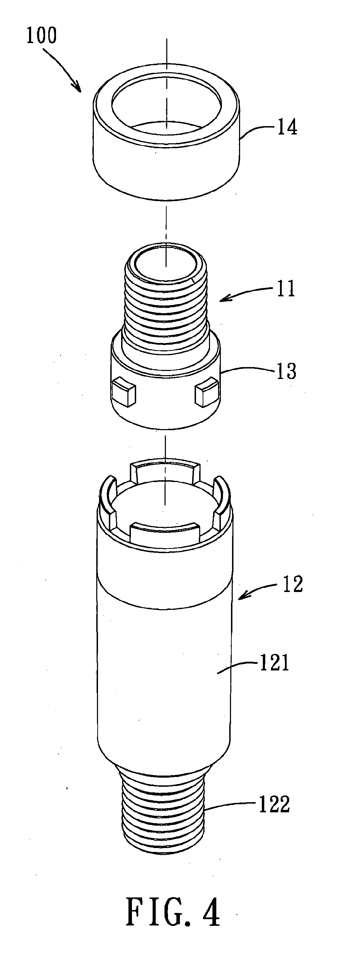

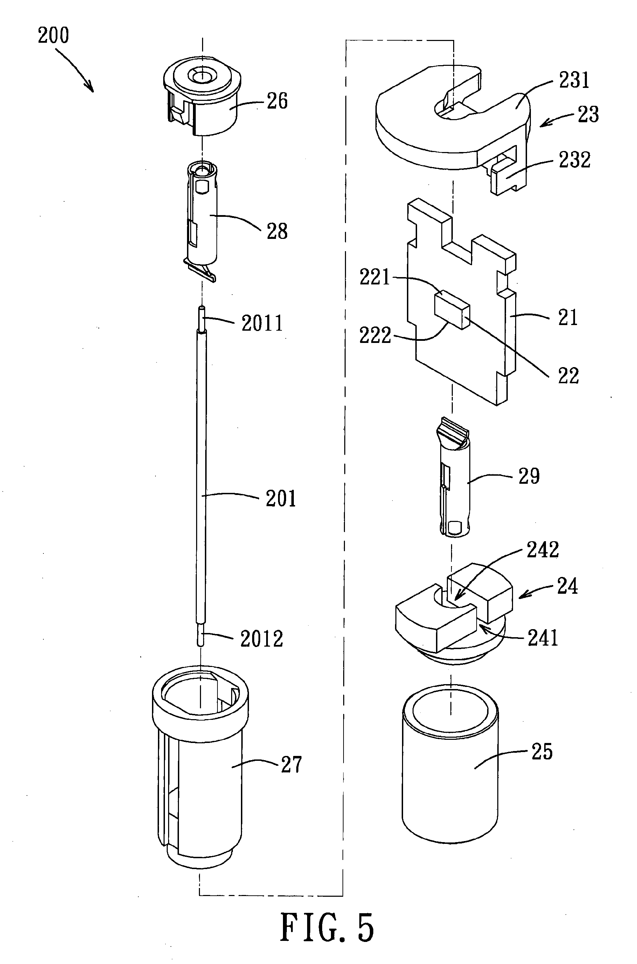

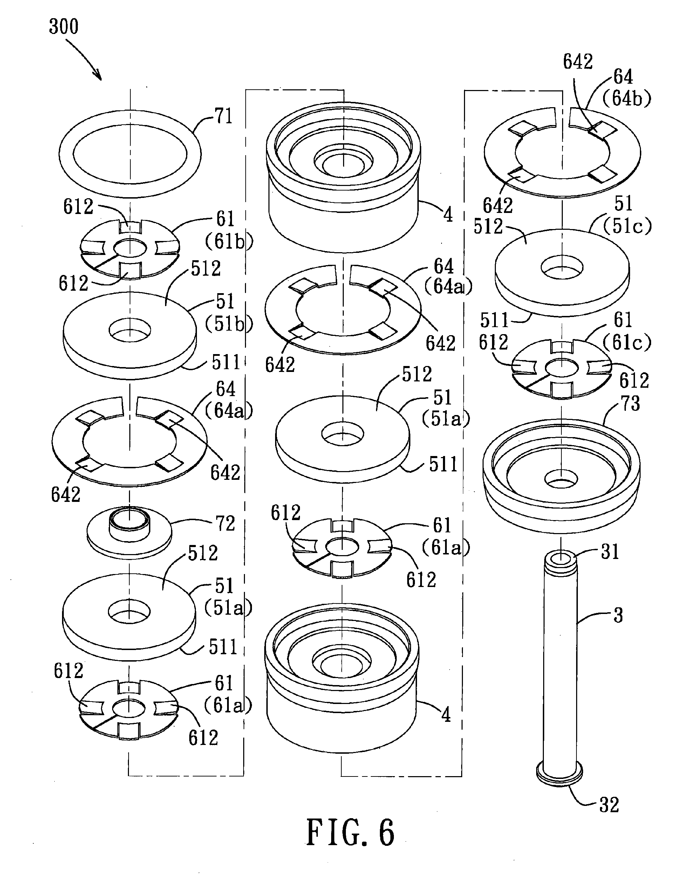

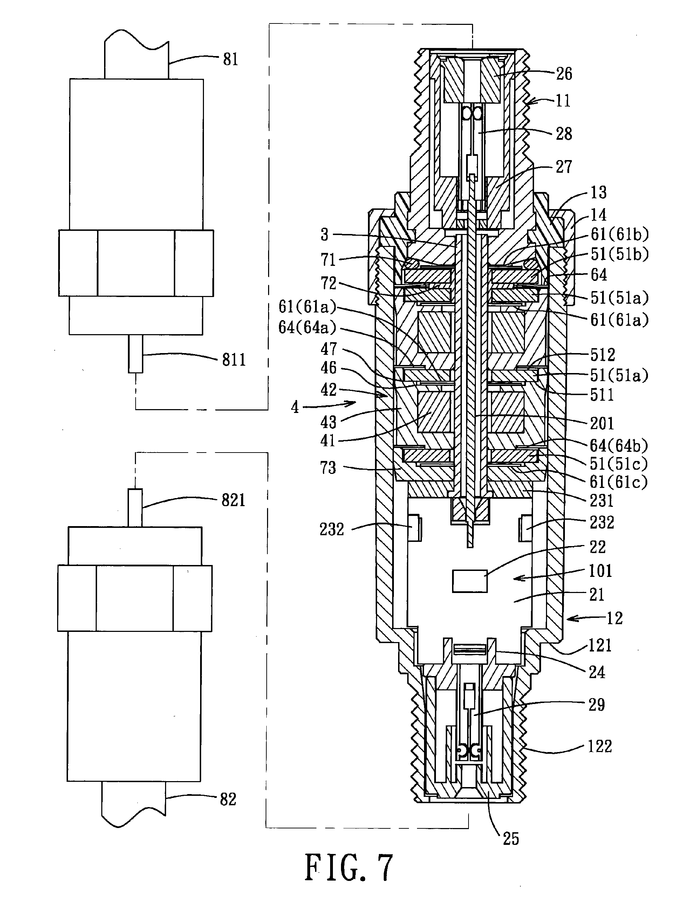

Figures 3 and 7 illustrate the preferred embodiment of a surge isolating device according to the present invention. The surge isolating device is to be connected in series between a first transmission line 81 and a second transmission line 82 for isolating surge on the first transmission line 81 so as to prevent the surge from entering the second transmission line 82. The surge isolating device includes a housing unit 100 (shown in Figure 4), a transmission unit 200 (shown in Figure 5) and an isolation unit 300 (shown in Figure 6).

With reference to Figures 3, 4 and 7, the housing unit 100 defines an internal space 101, and includes a conductive input-end housing 11, a conductive output-end housing 12, a first engaging member 13 and a second engaging member 14. The conductive input-end housing 11 and the conductive output-end housing 12 respectively serve as "outdoor ground" and "indoor ground". The conductive input-end housing 11 includes a threaded section adapted for threaded engagement with the first transmission line 81. The conductive output-end housing 12 includes a tubular housing body 121 and a threaded end section 122 connected to the tubular housing body 121 opposite to the threaded section of the conductive input-end housing 11, and adapted for threaded engagement with the second transmission line 82. The first engaging member 13 is attached to the conductive input-end housing 11, and interconnects the conductive input-end housing 11 and the tubular housing body 121 of the conductive output-end housing 12. The first engaging member 13 is made of an insulating material so as to isolate, in a conductive sense, the conductive input-end housing 11 and the conductive output-end housing 12. The second engaging member 14 is sleevingly connected to a junction between the first engaging member 13 and the tubular housing body 121 so as to restrict displacement of the first engaging member 13 relative to the tubular housing body 121. For this embodiment, the first engaging member 13 is attached to the conductive input-end housing 11 through an insert molding method.

With reference to Figures 3, 5 and 7, the transmission unit 200 is disposed in the internal space 101, and is used for transmitting a signal received by the first transmission line 81 to the second transmission line 82. The transmission unit 200 includes a transmission wire 201, a substrate 21, a coupling capacitor 22, a first positioning member 23, a second positioning member 24, a third positioning member 25, a fourth positioning member 26, a fifth positioning member 27, a first transmission member 28 and a second transmission member 29. The first positioning member 23, the second positioning member 24, the third positioning member 25, the fourth positioning member 26 and the fifth positioning member 27 are each made of an insulating material, while the first transmission member 28 and the second transmission member 29 are each made of a conductive metal material.

The fifth positioning member 27 has a tubular shape and is disposed within the conductive input-end housing 11. The fourth positioning member 26 is connected to the first end of the first transmission member 28, is disposed in the fifth positioning member 27, and is adapted for guiding a first core wire 811 of the first transmission line 81 to make contact with the first transmission member 28 for the first transmission members 28 to receive the signal from the first transmission line 81 through the first core wire 811.

The coupling capacitor is disposed on the substrate 21, and is a first terminal 221 electrically connected to the transmission wire 201.

The second transmission member 29 is electrically connected to the substrate 21 and to a second terminal 222 of the coupling capacitor 22, and is adapted to be disposed in contact with a second core wire 821 of the second transmission line 82.

The transmission wire 201 is adapted to be electrically connected between the first transmission line 81 and the second transmission line 82. Specifically, the transmission wire 201 has a first end 2011 connected to the first transmission member 28 and a second end 2012 connected to the coupling capacitor 22, and in turn to the substrate 21 and the second transmission member 29, such that the transmission wire 201 may be electrically connected between the first and second transmission lines 81, 82, and such that the signal received from the first transmission line 81 by the first transmission member 28 may be transmitted to the second transmission line 82 via the transmission wire 201, the substrate 21 and the second transmission member 29.

The first positioning member 23 includes a positioning body 231 and two fastening members 232 connected to the positioning body 231 and fastened to the substrate 21 such that the first positioning member 23 is connected to the substrate 21. The functionality of the first positioning member 23 will be described further on.

The second positioning member 24 defines a positioning groove 241 and a guiding passage 242 in spatial communication with the positioning groove 241. The positioning groove 241 receives one side of the substrate 21 while the guiding passage 242 allows the second transmission member 29 to extend therethrough.

The third positioning member 25 is connected at one end to an end of the second positioning member 24 opposite to the substrate 21, is disposed within the end section 122 of the conductive output-end housing 12, and is adapted for guiding the second core wire 821 of the second transmission line 82 to contact the second transmission member 29, thus transmitting the signal from the second transmission member 29 to the second transmission line 82.With reference to Figures 3, 6 and 7, the isolation unit 300 is disposed in the internal space 101, and includes a tubular conductive body 3, two inductors 4, four annular capacitors 51, four first annular conductive members 61, three second annular conductive members 64, an O-ring 71, a spacer 72, and a carrier 73.

The tubular conductive body 3 extends along an axial direction, has a first end 31 that is electrically connected to the conductive input-end housing 11, and a second end 32 that is connected to the positioning body 231 of the first positioning member 23 so as to prevent relative movement between the tubular conductive body 3 and the substrate 21. The tubular conductive body 3 has the transmission wire 201 extending therethrough, and is capable of generating mutual inductance with the transmission wire 201 by virtue of coupling therebetween. For this embodiment, the tubular conductive body 3 is made of nickel-plated brass.

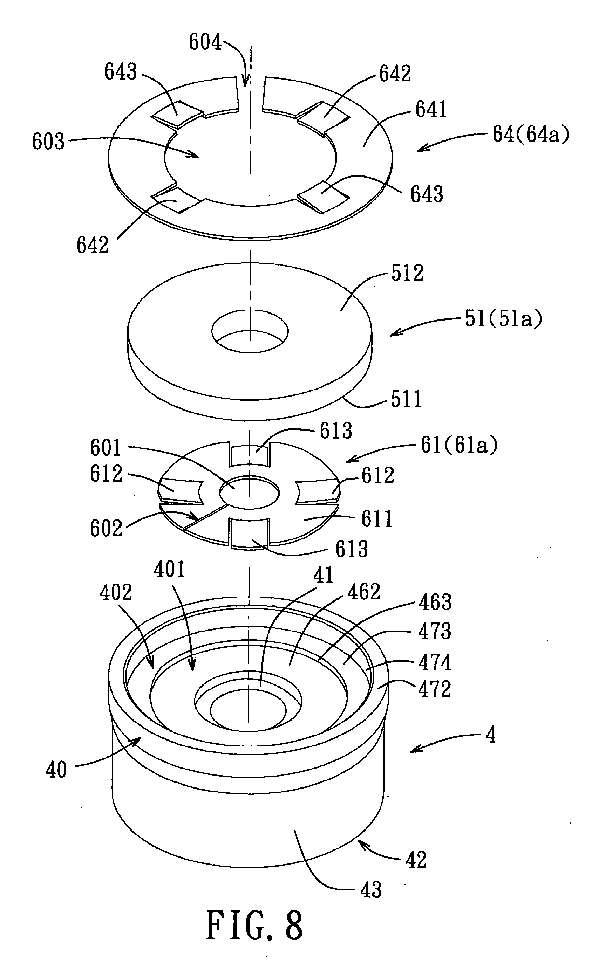

With reference to Figures 7 and 8, each of the inductors 4 is disposed within the tubular housing body 121 of the conductive output-end housing 12, and has the conductive tubular body 3 extending therethrough. Each of the inductors 4 is capable of generating mutual inductance with the tubular conductive body 3 by virtue of coupling therebetween, so as to increase the total inductance of the isolation unit 300. Each of the inductors 4 has a core 41 and a carrier 42. The core 41 may be made of an iron material, may be a dust core, but is not limited to what is disclosed herein. Details of the inductors 4 will be discussed later on.

Each of the annular capacitors 51 surrounds the tubular conductive body 3 and has a first surface 511 and a second surface 512 that are opposite to each other along the axial direction. The second surface 512 is electrically connected to the conductive output-end housing 12.

Each of the first annular conductive members 61 surrounds fittingly and tightly on the tubular conductive body 3, and has a radial outer edge and a radial inner edge defining a first central hole 601 that has a first central axis extending in the axial direction. A diameter of the first central hole 601 is slightly smaller than an outer diameter of the tubular conductive body 3 such that the tubular conductive body 3 extends fittingly and tightly through the first central hole 601 and contacts the radial inner edge. Each of the first annular conductive members 61 is formed with a first slit 602 that extends from the radial inner edge of the first annular conductive member 61 to the radial outer edge of the first annular conductive member 61. Each of the first annular conductive members 61 includes a first body portion 611 that is substantially ring-shaped, that defines the first central hole 601 and the radial inner and outer edges of the first annular conductive member 61, and that is formed with the first slit 602, and two first resilient plate portions 612 of which each extends from the first body portion 611 and is inclined relative to a first imaginary plane defined by the first body portion 611. In this embodiment, each of the first annular conductive members 61 further includes two additional first resilient plate portions 613, each extending from the first body portion 611 and being inclined relative to the first imaginary plane in a direction opposite to the first resilient plate portions 612 as a measure to ensure that a proper contact with the corresponding surface of the corresponding annular capacitor 51 can be made even if the first annular conductive member 61 is placed upside down. It should be noted herein that the first resilient plate portions 613 are optional.

Each of the second annular conductive members 64 has a radial outer edge, and a radial inner edge that defines a second central hole 603, which has a second central axis extending in the axial direction. The tubular conductive body 3 extends through the second central hole 603. The second annular conductive member 64 is formed with a second slit 604 that extends from the radial inner edge of the second annular conductive member 64 to the radial outer edge of the second annular conductive member 64. An outer diameter of the second annular conductive member 64 is slightly greater than an inner diameter of the tubular housing body 121 of the conductive outer-end housing 12 such that the second annular conductive member 64 is received fittingly and tightly in the tubular housing body 121. Each of the second annular conductive members 64 includes a second bodyportion 641 that is substantially ring-shaped, that defines the second central hole 603 and the radial inner and outer edges of the second annular conductive member 64, and that is formed with the second slit 604, and two second resilient plate portions 642 each of which extends from the second body potion 641 and is inclined relative to a second imaginary plane defined by the second body portion 641. In this embodiment, the second resilient plate portions 642 of each of the second annular conductive member 64 are disposed to contact and abut against the second surface 512 of a corresponding one of the annular capacitors 51 such that the second surface 512 of the corresponding one of the annular capacitors 51 is electrically connected to the conductive output-end housing 12. In this embodiment, similar to the first annular conductive members 61, each of the second annular conductive members 64 further includes two additional second resilient plate portions 643 each extending from the second body portion 641 and being inclined relative to the second imaginary plane in a direction opposite to the second resilient plate portions 642 to serve the purpose similar to that discussed with respect to the additional first resilient plate portions 613.

The annular capacitors 51 are each also labeled as 51a, 51b or 51c, the first annular conductive members 61 are each also labeled as 61a, 61b or 61c, and the second annular conductive members 62 are each also labeled as 62a and 62b. The following description will be made with reference to these labeling.

Referring to Figures 6 to 8, the first resilient plate portions 612 of each of the first annular conductive members 61a are inclined to contact and abut against the first surface 511 of a corresponding one of the annular capacitors 51a, such that the first surface 511 of the corresponding one of the annular capacitors 51a is electrically connected to the tubular conductive body 3, and in turn to the conductive input-end housing 11. The second resilient plate portions 642 of each of the second annular conductive members 64a are disposed to contact and abut against the second surface 512 of a corresponding one of the annular capacitors 51a such that the second surface 512 of the corresponding one of the annular capacitors 51a is electrically connected to the conductive output-end housing 12.

The carrier 42 of each of the inductors 4 includes a carrier body 43 that defines a first accommodating space 431 for accommodating the core 41, and a stepped structure 40 that is connected to the carrier body 43. The stepped structure 40 includes a first stepped segment 46 that is connected to the carrier body 43 and that defines a second accommodating space 461 for accommodating a corresponding one of the first annular conductive members 61a, and a second stepped segment 47 that is connected to the first stepped segment 46 opposite to the carrier body 43 and that defines a third accommodating space 471 for accommodating a corresponding one of the annular capacitors 51a. The second stepped segment 47 has an end surface 472 opposite to the first stepped segment 46 along the axial direction. Each of the second annular conductive members 64a abuts against the end surface 472 of the second stepped structure 47.

To describe in more detail, the first stepped segment 46 has a first radial surface 462 extending radially relative to the axial direction, and a first axial surface 463 connected to the first radial surface 462, extending in the axial direction away from the carrier body 43, and cooperating with the first radial surface 462 to define the second accommodating space 461. The second stepped segment 47 has a second radial surface 473 extending radially relative to the axial direction from the first axial surface 463, and a second axial surface 474 extending in the axial direction, connected between the second radial surface 473 and the end surface 472, and cooperating with the second radial surface 473 to define the third accommodating space 471.

Referring to Figures 6 and 7, the first resilient plate portions 612 of the first annular conductive member 61b are inclined to contact and abut against the second surface 512 of the annular capacitor 51b such that the second surface 512 of the annular capacitor 51b is electrically connected to the conductive input-end housing 11 via the tubular conductive body 3. The second resilient plate portions 642 of one of the second annular conductive members 64a adjacent to the annular capacitor 51b are disposed to contact and abut against the first surface 511 of the annular capacitor 51b, such that the first surface 511 of the annular capacitor 51b is electrically connected to the conductive output-end housing 12. The spacer 72 is disposed between the annular capacitor 51b and an adjacent one of the annular capacitors 51a, has the tubular conductive body 3 extending therethrough, and serves to isolate the annular capacitor 51b from the adjacent one of the annular capacitors 51a. The O-ring 71 is disposed to contact the second surface 512 of the annular capacitor 51b to prevent the generation of electric arcs. The first resilient plate portions 612 of the first annular conductive member 61c are inclined to contact and abut against the first surface 511 of the annular capacitor 51c such that the first surface 511 of the annular capacitor 51c is electrically connected to the conductive input-end housing 11 via the tubular conductive body 3. The second resilient plate portions 642 of the second annular conductive member 64b are disposed to contact and abut against the second surface 512 of the annular capacitor 51c, such that the second surface 512 of the annular capacitor 51c is electrically connected to the conductive output-end housing 12. The annular capacitor 51c and the first annular conductive member 61c are received in the carrier 73, and the carrier 73 abuts against the positioning body 231 of the first positioning member 23. The annular capacitors 51b and 51c serve to increase the overall capacitance of the isolation unit 300.

It is noted herein that other embodiments of the present invention may include only one of each of the inductors 4, the annular capacitors 51, the first annular conductive members 61 and the second annular conductive members 64.

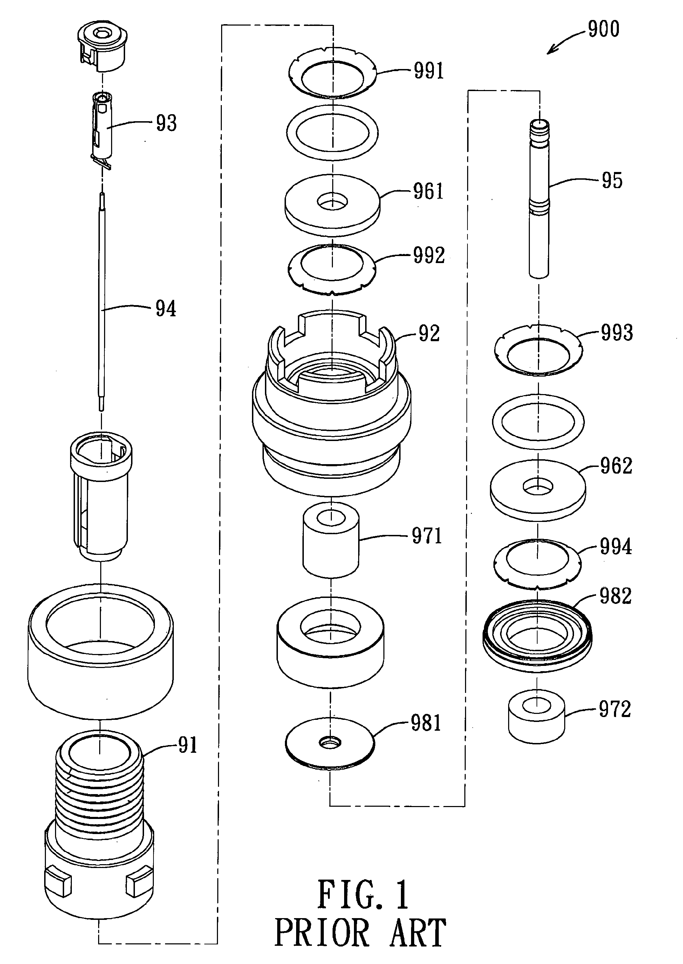

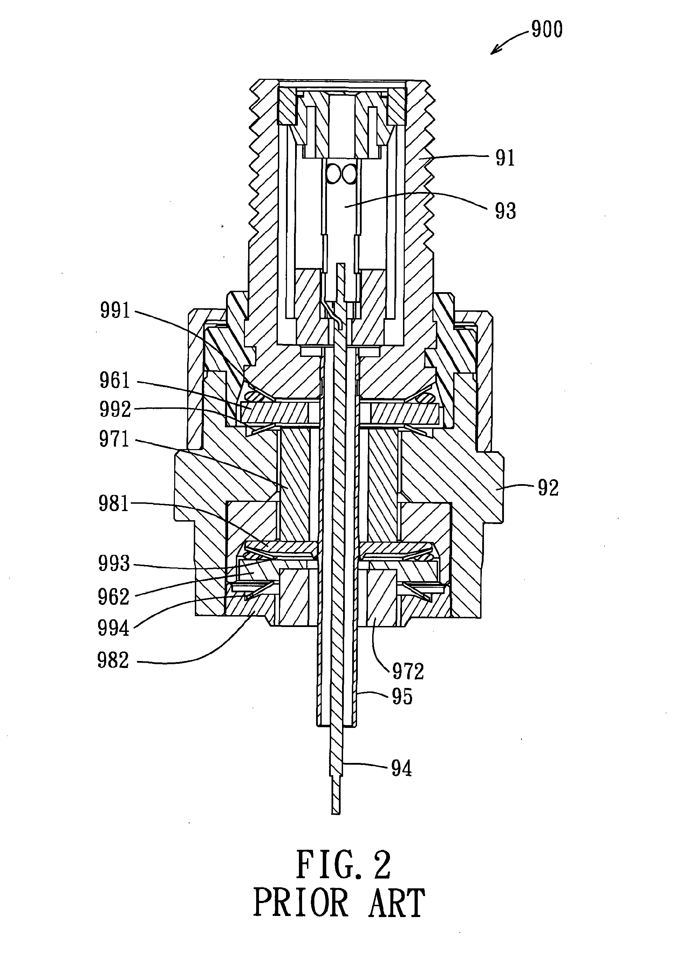

It is worthmentioning that the surge isolating device according to the present invention has effectively reduced in size as compared to the conventional surge isolating device 900 (as shown in Figure 1 and Figure 2).The effective size reduction is achieved by establishing the electrical connection between the annular capacitors 51and the input-end housing 11 through the respective first annular conductive member 61 and the tubular conductive body 3 and by establishing the electrical connection between the annular capacitors 51 and the output-end housing 12 through the respective second annular conductive member 64 Therefore, with the size reduction achieved, there is more room for a greater number of inductors 4 and annular capacitors may be used to enhance the surge isolation effect.

While the present invention has been described in connection with what is considered the most practical and preferred embodiment, it is understood that this invention is not limited to the disclosed embodiment but is intended to cover various arrangements included within the scope of the broadest interpretation so as to encompass all such modifications and equivalent arrangements.

## Claims

1. A surge isolating device to be connected in series between a first transmission line (81) and a second transmission line (82) for isolating surge on the first transmission line (81) so as to prevent the surge from entering the second transmission line (82), said surge isolating device comprising:
a housing unit (100) defining an internal space (101), and including a conductive input-end housing (11) and a conductive output-end housing (12) connected to each other; and
a transmission unit (200) disposed in said internal space (101), and including a transmission wire (201) that is to be electrically connected between the first transmission line (81) and the second transmission line (82);
said surge isolating device being **characterized by** an isolation unit (300) that is disposed in said internal space (101), and that includes
a tubular conductive body (3) extending along an axial direction, electrically connected to said conductive input-end housing (11), having said transmission wire (201) extending therethrough, and capable of generating mutual inductance with said transmission wire (201) by virtue of coupling therebetween,
an inductor (4) capable of generating mutual inductance with said tubular conductive body (3) by virtue of coupling therebetween,
an annular capacitor (51a) surrounding said tubular conductive body (3), and having a first surface (511) and a second surface (512) that are opposite to each other along said axial direction, said second surface (512) being electrically connected to said conductive output-end housing (12), and
a first annular conductive member (61a) surrounding fittingly on said tubular conductive body (3), and contacting said first surface (511) of said annular capacitor (51a) such that said first surface (511) of said annular capacitor (51a) is electrically connected to said tubular conductive body (3) and said conductive input-end housing (11).

2. The surge isolating device as claimed in Claim 1, **characterized in that** said first annular conductive member (61a) has a radial outer edge, and a radial inner edge defining a first central hole (601) that has a first central axis extending in the axial direction, a diameter of said first central hole (601) being slightly smaller than an outer diameter of said tubular conductive body (3) such that said tubular conductive body (3) extends fittingly through said first central hole (601) and contacts said radial inner edge, said first annular conductive member (61a) being formed with a first slit (602) that extends from said radial inner edge of said first annular conductive member (61a) to said radial outer edge of said first annular conductive member (61a) .

3. The surge isolating device as claimed in Claim 2, **characterized in that** said first annular conductive member (61a) includes a first body portion (611) that is substantially ring-shaped, that defines said first central hole (601) and said radial inner and outer edges of said first annular conductive member (61a), and that is formed with said first slit (602), and a first resilient plate portion (612) that extends from said first body portion (611) to contact and abut against said first surface (511) of said annular capacitor (51a).

4. The surge isolating device as claimed in Claim 1, **characterized in that** said isolation unit (300) further includes a second annular conductive member (64a) contacting said second surface (512) of said annular capacitor (51a) and said conductive output-end housing (12) such that said second surface (512) of said annular capacitor (51a) is electrically connected to said conductive output-end housing (12).

5. The surge isolating device as claimed in Claim 4, **characterized in that** said conductive output-end housing (12) includes a tubular housing body (121) accommodating said second annular conductive member (64a), said second annular conductive member (64a) having a radial outer edge, and a radial inner edge that defines a second central hole (603), which has a second central axis extending in the axial direction, said tubular conductive body (3) extending through said second central hole (603), said second annular conductive member (64a) being formed with a second slit (604) that extends from said radial inner edge of said second annular conductive member (64a) to said radial outer edge of said second annular conductive member (64a), an outer diameter of said second annular conductive member (64a) being slightly greater than an inner diameter of said tubular housing body (121).

6. The high-voltage surge protection device as claimed in Claim 5, **characterized in that** said second annular conductive member (64a) includes a second body portion (641) that is substantially ring-shaped, that defines said second central hole (603) and said radial inner and outer edges of said second annular conductive member (64a), and that is formed with said second slit (604), and a second resilient plate portion (642) that extends from said second body portion (641) to contact and abut against said second surface (512) of said annular capacitor (51a).

7. The surge isolating device as claimed in Claim 4, **characterized in that** said inductor (4) includes a core (41), a carrier (42) including a carrier body (43) defining a first accommodating space (431) for accommodating said core (41), and a stepped structure (40) including a first stepped segment (46) that is connected to said carrier body (43), and that defines a second accommodating space (461) for accommodating said first annular conductive member (61a), and a second stepped segment (47) that is connected to said first stepped segment (46) opposite to said carrier body (43), and that defines a third accommodating space (471) for accommodating said annular capacitor (51a), said second stepped segment (47) having an end surface (472) opposite to said first stepped segment (46) along the axial direction, said second annular conductive member (64a) abutting against said end surface (472) of said second stepped segment (47).

8. The surge isolating device as claimed in Claim 1, **characterized in that** said inductor (4) includes a core (41), a carrier (42) that defines a first accommodating space (431) for accommodating said core (41), a second accommodating space (461) for accommodating said first annular conductive member (61a), and a third accommodating space (471) for accommodating said annular capacitor (51a).

9. The surge isolating device as claimed in Claim 8, **characterized in that** said annular carrier (42) includes a carrier body (43) defining said first accommodating space (431), and a stepped structure (40) including a first stepped segment (46) that is connected to said carrier body (43), and that defines said second accommodating space (401), and a second stepped segment (47) that is connected to said first stepped segment (46) opposite to said carrier body (43), and that defines said third accommodating space (471).

10. The surge isolating device as claimed in Claim 8, **characterized in that** said transmission unit (200) further includes a substrate (21), a coupling capacitor (22) that is disposed on said substrate (21) and that is electrically connected to said transmission wire (201), and an insulating positioning member (23) that includes a positioning body (231) connected to said tubular conductive member (3), and at least one fastening member (232) connected to said positioning body (231) and fastened to said substrate (21) such that said insulating positioning member (23) is connected to said substrate (21).

11. The surge isolating device as claimed in Claim 1, wherein each of said conductive input-end housing (11), said conductive output-end housing (12), said tubular conductive body (3) and said first annular conductive member (61a) is made of a metal material.

## Patentansprüche

1. Überspannungsschutzvorrichtung, die dafür vorgesehen ist, zwischen einer ersten Übertragungsleitung (81) und einer zweiten Übertragungsleitung (82) in Serie geschaltet zu werden, zum Trennen einer auf der ersten Übertragungsleitung (81) auftretenden Überspannung, um zu verhindern, dass die Überspannung auf die zweite Übertragungsleitung (82) übergreift, wobei die Überspannungsschutzvorrichtung aufweist:
eine Gehäuseeinheit (100), die einen Innenraum (101) definiert und ein leitfähiges eingangsseitiges Gehäuse (11) und ein damit verbundenes leitfähiges ausgangsseitiges Gehäuse (12) aufweist; und
eine im Innenraum (101) angeordnete Übertragungseinheit (200) mit einem Übertragungsdraht (201), der zwischen der ersten Übertragungsleitung (81) und der zweiten Übertragungsleitung (82) elektrisch verbunden ist;
wobei die Überspannungsschutzvorrichtung **gekennzeichnet ist durch** eine im Innenraum (101) angeordnete Trenneinheit (300), die aufweist:
einen sich entlang einer axialen Richtung erstreckenden und mit dem leitfähigen eingangsseitigen Gehäuse (11) elektrisch verbundenen rohrförmigen leitfähigen Körper (3), **durch** den sich der Übertragungsdraht (201) erstreckt, und der dazu geeignet ist, **durch** eine Kopplung zwischen dem rohrförmigen leitfähigen Körper und dem Übertragungsdraht (201) eine gegenseitige Induktivität mit dem Übertragungsdraht (201) zu erzeugen;
eine Spule (4), die dazu geeignet ist, **durch** eine Kopplung zwischen der Spule und dem rohrförmigen leitfähigen Körper eine gegenseitige Induktivität mit dem rohrförmigen leitfähigen Körper (3) zu erzeugen;
einen ringförmigen Kondensator (51 a), der den rohrförmigen leitfähigen Körper (3) umgibt und eine erste Fläche (511) und eine zweite Fläche (512) aufweist, die sich entlang der axialen Richtung einander gegenüberliegen, wobei die zweite Fläche (512) mit dem leitfähigen ausgangsseitigen Gehäuse (12) elektrisch verbunden ist; und
ein erstes ringförmiges leitfähiges Element (61 a), das den rohrförmigen leitfähigen Körper (3) formschlüssig umschließt und mit der ersten Fläche (511) des ringförmigen Kondensator (51a) in Kontakt steht, so dass die erste Fläche (511) des ringförmigen Kondensators (51a) mit dem rohrförmigen leitfähigen Körper (3) und dem leitfähigen eingangsseitigen Gehäuse (11) elektrisch verbunden ist.

2. Überspannungsschutzvorrichtung nach Anspruch 1, **dadurch gekennzeichnet, dass** das erste ringförmige leitfähige Element (61 a) einen radial äußeren Rand und einen radial inneren Rand aufweist, der ein erstes mittiges Loch (601) definiert, das eine sich in die axiale Richtung erstreckende erste Mittelachse aufweist, wobei ein Durchmesser des ersten mittigen Lochs (601) etwas kleiner ist als ein Außendurchmesser des rohrförmigen leitfähigen Körpers (3), so dass der rohrförmige leitfähige Körper (3) sich formschlüssig durch das erste mittige Loch (601) erstreckt und mit dem radial inneren Rand in Kontakt steht, wobei im ersten ringförmigen leitfähigen Element (61a) ein sich vom radial inneren Rand des ersten ringförmigen leitfähigen Elements (61a) zum radial äußeren Rand des ersten ringförmigen leitfähigen Elements (61a) erstreckender erster Schlitz (602) ausgebildet ist.

3. Überspannungsschutzvorrichtung nach Anspruch 2, **dadurch gekennzeichnet, dass** das erste ringförmige leitfähige Element (61 a) einen im Wesentlichen ringförmigen ersten Körperabschnitt (611), der das erste mittige Loch (601) und den radial inneren und den radial äußeren Rand des ersten ringförmigen leitfähigen Elements (61 a) definiert, und in dem der ersten Schlitz (602) ausgebildet ist, und einen ersten elastischen Plattenabschnitt (612) aufweist, der sich vom ersten Körperabschnitt (611) erstreckt und mit der ersten Fläche (511) des ringförmigen Kondensator (51 a) in Kontakt steht und daran anliegt.

4. Überspannungsschutzvorrichtung nach Anspruch 1, **dadurch gekennzeichnet, dass** die Trenneinheit (300) ferner ein zweites ringförmiges leitfähiges Element (64a) aufweist, das mit der zweiten Fläche (512) des ringförmigen Kondensators (51 a) und mit dem leitfähigen ausgangsseitigen Gehäuse (12) in Kontakt steht, so dass die zweite Fläche (512) des ringförmigen Kondensators (51 a) mit dem leitfähigen ausgangsseitigen Gehäuse (12) elektrisch verbunden ist.

5. Überspannungsschutzvorrichtung nach Anspruch 4, **dadurch gekennzeichnet, dass** das leitfähige ausgangsseitige Gehäuse (12) einen rohrförmigen Gehäusekörper (121) aufweist, der das zweite ringförmige leitfähige Element (64a) aufnimmt, wobei das zweite ringförmige leitfähige Element (64a) einen radial äußeren Rand und einen radial inneren Rand aufweist, der ein zweites mittiges Loch (603) definiert, das eine sich in der axialen Richtung erstreckende zweite Mittelachse aufweist, der rohrförmige leitfähige Körper (3) sich durch das zweite mittige Loch (603) erstreckt, im zweiten ringförmigen leitfähigen Element (64a) ein zweiter Schlitz (604) ausgebildet ist, der sich vom radial inneren Rand des zweiten ringförmigen leitfähigen Elements (64a) zum radial äußeren Rand des zweiten ringförmigen leitfähigen Elements (64a) erstreckt, und wobei ein Außendurchmesser des zweiten ringförmigen leitfähigen Elements (64a) etwas größer ist als ein Innendurchmesser des rohrförmigen Gehäusekörpers (121).

6. Überspannungsschutzvorrichtung nach Anspruch 5, **dadurch gekennzeichnet, dass** das zweite ringförmige leitfähige Element (64a) einen im Wesentlichen ringförmigen zweiten Körperabschnitt (641), der das zweite mittige Loch (603) und den radial inneren und den radial äußeren Rand des zweiten ringförmigen leitfähigen Elements (64a) definiert, und in dem der zweite Schlitz (604) ausgebildet ist, und einen zweiten elastischen Plattenabschnitt (642) aufweist, der sich vom zweiten Körperabschnitt (641) erstreckt und mit der zweiten Fläche (512) des ringförmigen Kondensators (51 a) in Kontakt steht und daran anliegt.

7. Überspannungsschutzvorrichtung nach Anspruch 4, **dadurch gekennzeichnet, dass** die Spule (4) aufweist: einen Kern (41) und einen Träger (42) mit einem Trägerkörper (43), der einen ersten Aufnahmeraum (431) zum Aufnehmen des Kerns (41) und eine Stufenstruktur (40) mit einem ersten Stufenabschnitt (46), der mit dem Trägerkörper (43) verbunden ist und einen zweiten Aufnahmeraum (461) zum Aufnehmen des ersten ringförmigen leitfähigen Elements (61 a) definiert, und mit einem zweiten Stufenabschnitt (47) definiert, der mit dem ersten Stufenabschnitt (46) gegenüber dem Trägerkörper (43) verbunden ist und einen dritten Aufnahmeraum (471) zum Aufnehmen des ringförmigen Kondensators (51 a) definiert, wobei der zweite Stufenabschnitt (47) eine Endfläche (472) gegenüber dem ersten Stufenabschnitt (46) entlang der axialen Richtung aufweist, und wobei das zweite ringförmige leitfähige Element (64a) an der Endfläche (472) des zweiten Stufenabschnitts (47) anliegt.

8. Überspannungsschutzvorrichtung nach Anspruch 1, **dadurch gekennzeichnet, dass** die Spule (4) einen Kern (41) und einen Träger (42) aufweist, der einen ersten Aufnahmeraum (431) zum Aufnehmen des Kerns (41), einen zweiten Aufnahmeraum (461) zum Aufnehmen des ersten ringförmigen leitfähigen Elements (61 a) und einen dritten Aufnahmeraum (471) zum Aufnehmen des ringförmigen Kondensators (51 a) definiert.

9. Überspannungsschutzvorrichtung nach Anspruch 8, **dadurch gekennzeichnet, dass** der ringförmige Träger (42) einen Trägerkörper (43), der den ersten Aufnahmeraum (431) definiert, und eine Stufenstruktur (40) mit einem ersten Stufenabschnitt (46), der mit dem Trägerkörper (43) verbunden ist und den zweiten Aufnahmeraum (401) definiert, und mit einem zweiten Stufenabschnitt (47) aufweist, der mit dem ersten Stufenabschnitt (46) gegenüber dem Trägerkörper (43) verbunden ist und den dritten Aufnahmeraum (471) definiert.

10. Überspannungsschutzvorrichtung nach Anspruch 8, **dadurch gekennzeichnet, dass** die Übertragungseinheit (200) ferner ein Substrat (21), einen Koppelkondensator (22), der auf dem Substrat (21) angeordnet und mit dem Übertragungsdraht (201) elektrisch verbunden ist, und ein isolierendes Positionierungselement (23) aufweist, das einen mit dem rohrförmigen leitfähigen Element (3) verbundenen Positionierungskörper (231) und mindestens ein Befestigungselement (232) aufweist, das mit dem Positionierungskörper (231) verbunden und am Substrat (21) befestigt ist, so dass das isolierende Positionierungselement (23) mit dem Substrat (21) verbunden ist.

11. Überspannungsschutzvorrichtung nach Anspruch 1, wobei das leitfähige eingangsseitige Gehäuse (11), das leitfähige ausgangsseitige Gehäuse (12), der rohrförmige leitfähige Körper (3) und das erste ringförmige leitfähige Element (61 a) jeweils aus einem Metallmaterial hergestellt sind.

## Revendications

1. Dispositif d'isolation contre les surtensions, destiné à être relié en série entre une première ligne de transmission (81) et une deuxième ligne de transmission (82) pour isoler des surtensions sur la première ligne de transmission (81), de manière à empêcher les surtensions d'entrer dans la deuxième ligne de transmission (82), ledit dispositif d'isolation contre les surtensions comprenant :
une unité de boîtier (100) définissant un espace interne (101) et comprenant un boîtier conducteur côté entrée (11) et un boîtier conducteur côté sortie (12) reliés l'un à l'autre ; et
une unité de transmission (200) disposée dans ledit espace interne (101) et comprenant un fil de transmission (201) destiné à être électriquement connecté entre la première ligne de transmission (81) et la deuxième ligne de transmission (82) ;
ledit dispositif d'isolation contre les surtensions étant **caractérisé par** une unité d'isolation (300) disposée dans ledit espace intérieur (101) et comprenant
un corps conducteur tubulaire (3) s'étendant le long d'une direction axiale, électriquement connecté audit boîtier conducteur côté entrée (11), à travers lequel s'étend ledit fil de transmission (201), et capable de générer une inductance mutuelle avec ledit fil de transmission (201) à l'aide d'un accouplement entre eux,
un inducteur (4) capable de générer une inductance mutuelle avec ledit corps conducteur tubulaire (3) à l'aide d'un accouplement entre eux,
un condensateur annulaire (51a) entourant ledit corps conducteur tubulaire (3) et présentant une première surface (511) et une deuxième surface (512) opposées l'une à l'autre le long de ladite direction axiale, ladite deuxième surface (512) étant électriquement connectée audit boîtier conducteur côté sortie (12), et
un premier élément conducteur annulaire (61a) entourant étroitement ledit corps conducteur tubulaire (3), et touchant ladite première surface (511) dudit condensateur annulaire (51a) de manière à ce que ladite première surface (511) dudit condensateur annulaire (51a) est électriquement connectée audit corps conducteur tubulaire (3) et audit boîtier conducteur côté entrée (11).

2. Dispositif d'isolation contre les surtensions selon la revendication 1, **caractérisé en ce que** ledit premier élément conducteur annulaire (61a) présente un bord extérieur radial et un bord intérieur radial définissant un premier trou central (601) présentant un premier axe médian s'étendant dans la direction axiale, un diamètre dudit premier trou médian (601) étant légèrement inférieur à un diamètre extérieur dudit corps conducteur tubulaire (3), de sorte que ledit corps conducteur tubulaire (3) s'étend en ajustement serré à travers ledit premier trou central (601) et touche ledit bord intérieur radial, ledit premier élément conducteur annulaire (61a) étant formé avec une première fente (602) s'étendant à partir dudit bord intérieur radial dudit premier élément conducteur annulaire (61a) vers ledit bord extérieur radial dudit premier élément conducteur annulaire (61a).

3. Dispositif d'isolation contre les surtensions selon la revendication 2, **caractérisé en ce que** ledit premier élément conducteur annulaire (61a) comprend une première partie de corps (611) substantiellement annulaire, définissant ledit premier trou central (601) et lesdits bords intérieur et extérieur radiaux dudit premier élément conducteur annulaire (61a), tout en étant formé avec ladite première fente (602), et une première partie de plaque élastique (612) s'étendant à partir de ladite première partie de corps (611) pour toucher et buter contre ladite première surface (511) dudit condensateur annulaire (51a).

4. Dispositif d'isolation contre les surtensions selon la revendication 1, **caractérisé en ce que** ladite unité d'isolation (300) comprend en outre un deuxième élément conducteur annulaire (64a) en contact avec ladite deuxième surface (512) dudit condensateur annulaire (51a) et dudit boîtier conducteur côté sortie (12), de sorte que ladite deuxième surface (512) dudit condensateur annulaire (51a) est électriquement connectée audit boîtier conducteur côté sortie (12).

5. Dispositif d'isolation contre les surtensions selon la revendication 4, **caractérisé en ce que** ledit boîtier conducteur côté sortie (12) comprend un corps de boîtier tubulaire (121) accueillant ledit deuxième élément conducteur annulaire (64a), ledit deuxième élément conducteur annulaire (64a) présentant un bord extérieur radial et un bord intérieur radial définissant un deuxième trou central (603) présentant un deuxième axe médian s'étendant dans la direction axiale, ledit corps conducteur tubulaire (3) s'étendant à travers ledit deuxième trou central (603), ledit deuxième élément conducteur annulaire (64a) étant formé avec une deuxième fente (604) s'étendant à partir dudit bord intérieur radial dudit deuxième élément conducteur annulaire (64a) jusqu'au dit bord extérieur radial dudit deuxième élément conducteur annulaire (64a), un diamètre extérieur dudit deuxième élément conducteur annulaire (64a) étant légèrement supérieur à un diamètre intérieur dudit corps de boîtier tubulaire (121).

6. Dispositif d'isolation contre les surtensions à haute tension selon la revendication 5, **caractérisé en ce que** ledit deuxième élément conducteur annulaire comprend une deuxième partie de corps (641) substantiellement annulaire, définissant ledit deuxième trou central (603) et lesdits bords intérieur et extérieur radiaux dudit deuxième élément conducteur annulaire, tout en étant formée avec ladite deuxième fente (604), et une deuxième partie de plaque élastique (642) s'étendant à partir de ladite deuxième partie de corps (641) pour toucher et buter contre ladite deuxième surface (512) dudit condensateur annulaire (51a).

7. Dispositif d'isolation contre les surtensions selon la revendication 4, **caractérisé en ce que** ledit inducteur (4) comprend un noyau (41), un support (42) y compris un corps de support (43) définissant un premier espace d'accueil (431) pour accueillir ledit noyau (41), et une structure étagée (40) comprenant un premier segment étagé (46) relié audit corps de support (43) et définissant un deuxième espace d'accueil (461) destiné à accueillir ledit premier élément conducteur annulaire (61a), et un deuxième segment étagé (47) relié audit premier segment étagé (46) à l'opposé dudit corps de support (43) et définissant un troisième espace d'accueil (471) destiné à accueillir ledit condensateur annulaire (51a), ledit deuxième segment étagé (47) présentant une surface finale (472) opposée audit premier segment étagé (46) le long de la direction axiale, ledit deuxième élément conducteur annulaire (64a) butant contre ladite surface finale (472) dudit deuxième segment étagé (47).

8. Dispositif d'isolation contre les surtensions selon la revendication 1, **caractérisé en ce que** ledit inducteur (4) comprend un noyau (41), un support (42) définissant un premier espace d'accueil (431) destiné à accueillir ledit noyau (41), un deuxième espace d'accueil (461) destiné à accueillir ledit premier élément conducteur annulaire (61a), et un troisième espace d'accueil (471) destiné à accueillir ledit condensateur annulaire (51a).

9. Dispositif d'isolation contre les surtensions selon la revendication 8, **caractérisé en ce que** ledit support annulaire (42) comprend un corps de support (43) définissant ledit premier espace d'accueil (431), et une structure étagée (40) comprenant un premier segment étagé (46) relié audit corps de support (43) et définissant ledit deuxième espace d'accueil (401), et un deuxième segment étagé (47) relié audit premier segment étagé (46) à l'opposé dudit corps de support (43) et définissant un troisième espace d'accueil (471).

10. Dispositif d'isolation contre les surtensions selon la revendication 8, **caractérisé en ce que** ladite unité de transmission (200) comprend en outre un substrat (21), un condensateur d'accouplement (22) disposé sur ledit substrat (21) et électriquement connecté audit fil de transmission (201), et un élément de positionnement isolant (23) comprenant un corps de positionnement (231) connecté audit élément conducteur tubulaire (3), et au moins un élément de fixation (232) relié audit corps de positionnement et fixé audit substrat (21) de manière à ce que ledit élément de positionnement isolant (23) soit relié audit substrat (21).

11. Dispositif d'isolation contre les surtensions selon la revendication 1, dans lequel chacun parmi ledit boîtier conducteur côté entrée (11), ledit boîtier conducteur côté sortie (12), ledit corps conducteur tubulaire (3) et ledit premier élément conducteur annulaire (61a) est constitué d'un matériau métallique.
